# EUROPEAN PATENT APPLICATION

(11) **EP 1 985 587 A1**
(43) Date of publication of application: **29.10.2008**
(21) Application number: 08006940.4
(22) Date of filing: 08.04.2008
(51) Int. Cl.: C01G 43/025, C01G 43/01, C01G 43/06

(54) **Two step dry UO2 production process**

(30) Priority: 27.04.2007 US 741158
(71) Applicant: Westinghouse Electric Company LLC, Pittsburgh PA 15146-2866 (US)
(72) Inventor: Lahoda, Edward J., Pittsburg Pennsylvania 15218 (US)
(74) Representative: Gallo, Wolfgang

(57) **Abstract**

The present invention provides a two-step process for producing nuclear grade, active uranium dioxide (UO₂) powder in which the first step comprises reacting uranium hexafluoride (UF₆) with steam in, for example, an integrated dry route (IDR)-type kiln or a flame reactor to yield uranyl fluoride (UO₂F₂); and the second step comprises removing fluoride and reducing UO₂F₂ to uranium dioxide (UO₂) in a second kiln under a steam/hydrogen atmosphere. The two-step process tightly controls the exothermicity of the reaction, which allows for a very tight temperature control which controls the growth of the particles and results in UO₂ powder that is active.

## Description

The present invention relates to methods of manufacturing uranium oxide powder for use as nuclear fuel and, more particularly, to a two-step dry process for producing uranium oxide powder that eliminates the need for wet processing, and results in stable pellets.

The preparation of commercial nuclear fuels mainly has been by processes which use enriched and depleted uranium (i.e., enriched or depleted in the uranium-235 isotope) feed as UF₆. The enriched UF₆ is converted to UO₂ by processes selected to give the ceramic sinterability needed for the preparation of nuclear fuel pellets.

While procedures for converting UF₆ to uranium oxides are known, currently available procedures are not particularly efficient or economical for converting UF₆ to UO₂. More specifically, the UF₆ conversions for nuclear fuels have been developed to prepare UO₂ with well controlled ceramic properties and thus are not optimum for processing uranium. Furthermore, because of the need to control their ceramic properties and because of thermodynamic limitations, the known commercial conversion processes are either complex aqueous-based processes with multiple process stages or a one stage dry process. Both are difficult to operate.

Numerous U.S. patents have been issued directed towards processes for the conversion of UF₆ to uranium oxides. See, for example, U.S. Pat. No. 4,830,841 and the U.S. patents listed therein, which describe procedures for converting UF₆ to uranium dioxide in furnaces, rotary kilns, fluidized beds and the like. For example, U.S. Pat. No. 4,830,841 is directed to a process for preparing UO₂ from UF₆ by reacting UF₆ with steam to produce submicron uranyl fluoride powder, fluidizing a bed of uranium oxide material with a mixture of steam, hydrogen and inert gas at about 580° C. to about 700° C., and introducing the submicron uranyl fluoride powder into the fluidized bed of uranium oxide material so that the uranyl fluoride powder is agglomerated, densified, fluidized, defluorinated and reduced to a fluoride-containing uranium oxide material which is removed from the fluidized bed and then contacted with hydrogen and steam at elevated temperature to obtain UO₂ essentially free of fluoride. The UO₂ product produced from this process tends to be very inactive and requires an intense milling step to produce moderately active powder. In addition, there often is incomplete conversion of UO₂F₂ to UO₃/U₃O₈, which leads to unacceptable contamination in the final UO₂ powder. This likely is due to inadequate residence time and the growth of large particles in the initial phase which cannot complete the fluoride removal reaction.

Other U.S. patents disclose single-step processes for producing nuclear reactor fuel, such as U.S. Patent No. 4,397,824 and U.S. Patent No. 5,875,385. An exemplary single-step process for producing solid uranium oxide powder is disclosed in U.S. Patent No. 5,752,158, which describes a single-step MDR process for producing solid uranium oxide powder and gaseous HF from UF₆ by bringing together two gaseous reactant streams, one of the streams comprising UF₆ optionally admixed with oxygen as O₂, and the second reactant stream comprising a mixture of hydrogen as H₂ or as a hydrogen-containing compound and oxygen as an oxygen-containing compound. The gaseous reactant streams are brought together at a temperature and composition such that the UF₆ is converted rapidly by flame reaction into readily separable solid uranium oxide and a gaseous HF product. Another single-step process is disclosed in U.S. Patent No. 4,112,005, which describes reacting UF₆ with steam within a first region of a vessel in which UO₂F₂ is obtained, which then is subjected to reduction within a second region of the vessel to obtain UO₂. The UO₂F₂ obtained is contacted with a mixture of hydrogen gas and steam in a first zone of the second region of the vessel, in which an oxide having an intermediate composition between U₃O₈ and UO₂ is contacted with the hydrogen gas within a second zone of the second region of said vessel. The problem with these processes is the low feed rate due to the need to produce acceptable ceramic grade UO₂ powder that can be made into dense UO₂ pellets.

Single-step dry processes for obtaining uranium dioxide powder (i.e., by direct reduction of UF₆ into UO₂) which include the IDR process have been widely used and are described in, for example, U.S. Patent No. 4,889,663; U.S. Pat. No. 4,397,824 and French No. 2,060,242. The powders obtained by the dry conversion process, including water vapor hydrolysis followed by pyrohydrolysis of the uranyl fluoride UO₂F₂ obtained, have the advantage of being readily sinterable. The powder produced is very active but hard to handle and produces very weak green pellets. Handling therefore is delicate and rejects are numerous if special care is not exercised. The IDR process converts UF₆ to UO₂ in a one-step, vapor/solid phase reaction that is hard to control and tends to produce a product with a UO₂F₂ contaminant. Part of the problem with this process is that two very exothermic processes occur in the same location at the tip of the mixing nozzle: (1) formation of UO₂F_{2;} and (2) some UO₃/U₃O₈ from the reaction of steam and entrained hydrogen from the surrounding atmosphere.

Another process for producing UO₂ fuel pellets is disclosed in U.S. Patent No. 5,091,120, which describes a method for producing fritted UO₂ nuclear fuel pellets from metallic uranium. This method uses high value metal and therefore is not economically feasible.

U.S. Patent No. 6,656,391 discloses the use of an ammonium diuranate process (ADU) to produce both UO₃/U₃O₈ from both uranyl nitrate hexahydrate (UNH) and UF₆. In particular, the UO₃/U₃O₈ that is produced from this process then is processed in a calciner to produce UO₂. The ADU process produces a stable but only moderately active (i.e., only achieves a final pellet density of about 97.5% on a consistent basis) UO₂ powder. In addition, this process produces a large amount of liquid waste from the neutralization of the fluoride (CaF₂). The residual fluoride, while low, still is a hazardous material. Furthermore, the nitrate-based recycle (UNH) must be spiked with HF in order for it to have reasonable handling properties during the centrifugation and drying steps while producing a significant amount of nitrate that must be handled in the discharge. The nitrate disrupts the ammonia recovery process due to the required addition of sodium hydroxide to free the ammonia from the nitrate. Another problem is the carryover of NH₄F in the dried UO₃/U₃O₈ product to the final calciner. This fluoride tends to agglomerate the UO₂ fines which reduces the overall powder activity and produces a semi-volatile NH₄F material that plates out and plugs the off-gas vents of the calciner.

A further process for producing nuclear reactor fuels is disclosed in U.S. Patent No. 4,053,559, which describes a three-step process using continuous, four stage fluidized beds interconnected in series to provide substantially complete conversion of UF₆ to UO₂. This process, however, is quite complicated, hard to operate and generates much residual fluoride.

Notwithstanding the extensive prior efforts referred to above, there remains a substantial need for improved procedures for converting UF₆ into solid UO₂ that produces a highly active, ceramic grade UO₂ powder at high productions ratio and which is easy to control.

The present invention meets this need by providing a two-step process for producing nuclear grade, active uranium dioxide (UO₂) powder, comprising a first step comprised of reacting uranium hexafluoride (UF₆) with steam in, for example, an integrated dry route (IDR)-type kiln or a flame reactor to yield uranyl fluoride (UO₂F₂) and uranium trioxide/uranium octaoxide (UO₃/UO₈); and a second step comprising removing fluoride and reducing UO₃/UO₈ and/or UO₂F₂ to uranium dioxide (UO₂) in a second kiln such as, for example, a calciner under a steam/hydrogen atmosphere.

In the first step of the process, the steam to UF₆ mole ratio can range from between about 2 to 10. Varying the steam/UF₆ ratio controls the temperature of the reaction which varies the properties of the UO₂F₂ powder that is produced as well as the final UO₂ powder properties.

In the second step carried out in a separate kiln, the steam to hydrogen mole ratio can range from between about 1 to 50. The residence time in the second kiln can range from between about 0.25 to 4.0 hours.

In both steps of the process, the temperature can range from between about 300°C to 900°C.

It is an object of the present invention to provide a two-step dry process for making nuclear grade, active UO₂ powder which tightly controls the exothermicity of the process and thus allows for very tight temperature control of the process.

It is a further object of the present invention to provide a two-stage process wherein UF₆ first is converted to UO₂F₂ using steam and optionally adding hydrogen, and then converting the UO₂F₂ to UO₂ using a mixture of steam and hydrogen, which contains only very small amounts of UO₂F₂ (less than about 50 ppm).

It is a further object of the present invention to provide a two-stage process for making nuclear grade, stable, active UO₂ powder, in which the two-stage process is carried out in two kilns, calciners or in flame reactors in which significant amounts of solids are retained in the kiln or calciner or are entrained in the flame reactor flame.

The present invention provides a two-step process for producing nuclear grade, active uranium dioxide (UO₂) powder. The first step of the process comprises reacting uranium hexafluoride (UF₆) with steam in, for example, an integrated dry route (IDR)-type kiln or a flame reactor to yield uranyl fluoride (UO₂F₂) and uranium trioxide/uranium octaoxide (UO₃/UO₈). The second step of the process comprises removing fluoride and reducing UO₃/UO₈ and/or UO₂F₂ to uranium dioxide (UO₂) in a second kiln, such as, for example, a calciner, under a steam/hydrogen atmosphere.

In the first step of the process, the steam to UF₆ mole ratio can range from between about 4 to 8. To help control the flame temperature in the first step, a small amount of hydrogen gas optionally is added.

In the second step, the steam to hydrogen mole ratio can range from between about 2 to 6. The residence time in the second kiln can range from between about 0.25 to 1.0 hour.

In the first step of the process, the temperature can range from between about 300° C to about 700° C. In the second step of the process, the temperature can range from between about 500°C to about 700°C.

### EXAMPLE

The following example is intended to illustrate the invention and should not be construed as limiting the invention in any way.

In the first reaction, the steam/UF₆ ratio (by weight) = 3.14 with the temperature in the first flame reactor of 400 °C.

In the second reaction, the steam/H₂ ratio = 20 (by weight), with the temperature held at 600°C in the second kiln. The steam/UO₂ ratio = 1 by weight.

The powder surface area is equal to approximately 2-3. The final density of pellets is approximately 98.5%.

While specific embodiments have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of method described herein, which is to be given the full breadth of the appended claims and any and all equivalents thereof.

## Claims

1. A two-step process for producing nuclear grade, active uranium dioxide (UO₂) powder, comprising:
a first step comprising reacting uranium hexafluoride (UF₆) with steam to yield uranyl fluoride (UO₂F₂) and uranium trioxide/uranium octaoxide (UO₃/UO₈); and
a second step comprising removing fluoride and reducing UO₃/UO₈ and/or UO₂F₂ to uranium dioxide (UO₂) in a kiln under a steam/hydrogen atmosphere.

2. The two-step process according to claim 1, wherein said first step is conducted in an apparatus selected from the group consisting of an integrated dry route (IDR)-type kiln and a flame reactor.

3. The two-step process according to claim 1 or 2, wherein said second step is conducted in a second kiln.

4. The two-step process according to any of claims 1 to 3, wherein in said first step the steam to UF₆ mole ratio ranges from about 4 to 8.

5. The two-step process according to any of claims 1 to 4, wherein said first step is conducted at a temperature ranging from between about 300°C to about 700°C.

6. The two-step process according to any of claims 1 to 5, wherein said second step is conducted at a temperature ranging from between about 500°C to about 700°C.

7. The two-step process according to any of claims 1 to 6, further comprising in said first step optionally adding a small amount of hydrogen to help control flame temperature.

8. The two-step process according to any of claims 1 to 7, wherein in said second step the steam to hydrogen mole ratio ranges from about 2 to 6.

9. The two-step process according to an of claims 1 to 8, wherein in said second step the residence time in said second kiln is from between about 0.25 to about 1 hour.
